# EUROPÄISCHE PATENTSCHRIFT

(11) **EP 1 262 384 B1**
(45) Veröffentlichungstag und Bekanntmachung des Hinweises auf die Patenterteilung: **04.10.2006**
(21) Anmeldenummer: 02010876.7
(22) Anmeldetag: 15.05.2002
(51) Int. Cl.: B60R 25/00, G01S 13/04

(54) **Radarsystem zur Überwachung eines KFZ-Innenraums**
Radar system for monitoring the interior of a vehicle
Système radar pour surveiller l'intérieur d'un véhicule

(30) Priorität: 23.05.2001 DE 10125311
(43) Veröffentlichungstag der Anmeldung: 04.12.2002
(73) Patentinhaber: Delphi Technologies, Inc., Troy, MI 48007 (US)
(72) Erfinder: Klimm, Christian Helmut, 51647 Gummersbach (DE)
(74) Vertreter: Manitz, Finsterwald & Partner GbR

(56) Entgegenhaltungen:
- EP-A- 0 158 731
- EP-A- 0 188 757
- EP-A- 0 482 401
- EP-A- 0 916 969
- WO-A-99/50686
- DE-A- 19 929 794
- DE-C- 19 521 511
- DE-C- 19 732 776
- US-A- 5 936 524
- US-B1- 6 169 512
- US-B1- 6 208 248

## Beschreibung

Die Erfindung betrifft ein Überwachungssystem insbesondere für Kraftfahrzeuge, mit wenigstens einem als Radareinheit vorgesehenen Sensor, der pulsartige Radarsignale ausstrahlt und in einem zu überwachenden Bereich reflektierte Radarsignale empfängt, die zur Erkennung von Eingriffen in den überwachten Bereich herangezogen werden.

Bei Überwachungssystemen dieser Art wird mittels einer geeigneten Elektronik ein zeitlich stark begrenzter elektromagnetischer Puls ausgesendet, der an verschiedenen Stellen im Fahrzeuginnenraum zum Sensor hin zurückreflektiert wird und dabei als Kriterium für einen Eintritt oder Eingriff in eine definierte Zone um den Sensor herum dient. Da der jeweilige Impuls eine fest definierte Zeit für die Wegstrecke zu einem in einer Entfernung X vorgesehenen Objekt und zurück benötigt, ist eine Zuordnung zwischen dem Ort des betreffenden Objekts und der betreffenden Auswirkung auf die Feldstärke möglich. Mit einer entsprechenden elektronischen Schaltung einschließlich einer entsprechend gesteuerten, z.B. zwischen der Empfangsantenne und einem Verstärker vorgesehenen Torschaltung kann für eine solche Zuordnung gesorgt werden. Die örtliche Zuordnung hängt allerdings nicht nur von dem Reflexionsverhalten der jeweiligen Kugelschale ab, sondern auch von Intensitätsschwankungen des Sendesignals ab, die z.B. auf eine Modulation des Sendesignals (Störquelle) oder auf Störungen des Empfangssignals zurückgehen können. Um hier Störquellen erkennen zu können, genügt es nicht, die Intensität in einer fest eingestellten Entfernung bzw. die Intensität des empfangenen, zuvor in einer bestimmten Entfernung reflektierten Impulses zu messen. Eine Aussage oder Störung ist nur möglich, wenn klar ist, ob und ggf. inwieweit Störungen auch bei anderen Radien bzw. auf anderen Kugelschalen um den Sensor herum vorliegen.

Bei den bisher üblichen Überwachungssystemen tritt das Problem auf, daß die Sensoren in der Regel auch dann Alarm auslösen, wenn in der Nähe des Sensors Störsignale auftreten. Solche Störsignale können von verschiedenen Quellen stammen (z.B. EMC oder elektromagnetische Einstreuungen, passive Intermodulation, Störfleckänderungen, usw.). Da in Fahrzeugen in der Regel eine Vielzahl solcher Störsignalquellen vorhanden sind, arbeiten die Sensoren in der Praxis nicht in der gewünschten Weise und mit der erforderlichen Zuverlässigkeit und Sicherheit.

Bei einem aus der EP-A-0 188 757 bekannten Überwachungssystem der eingangs genannten Art ist der überwachte Bereich in eine Vielzahl von Messzellen in Form von Kreisringsektoren unterteilt, für die jeweils ein mittlerer Messwert gebildet wird. Mit einem jeweiligen Antennenumlauf wird die Differenz zwischen dem aktuellen Messwert einer jeweiligen Messzelle und dem Mittelwert dieser Zelle ermittelt. Der Differenzwert wird als Streuwert mit einem der jeweiligen Messzelle zugeordneten Schwellwert verglichen. Wird der Schwellwert überschritten, wird für die betreffende Messzelle ein Alarmsignal abgeleitet. Sobald entsprechende Alarmsignale bezüglich mehrerer benachbarter Messzellen auftreten, wird eine Alarmmeldung abgegeben und angezeigt. Es werden also stets Messwerte ein und derselben Messzelle miteinander verglichen. Zudem müssen Intrusionsspuren angelegt werden, anhand derer entschieden wird, ob eine Alarmmeldung abgegeben wird.

In der US-B 1-6 208 248 ist ein Überwachungssystem beschrieben, bei dem der jeweilige Entfernungsbereich um eine kleine Strecke näher an dem Radarsensor in einen Bereich B herangerückt wird, wenn im vorangegangenen Bereich ein Ziel erfasst wurde. Wird dort im näher gelegenen Bereich B innerhalb einer vorgegebenen Zeit ein sich näherndes Ziel erfasst, so wird der Entfernungsbereich nochmals um eine kleine Strecke näher an den Radarsensor in einen Bereich C herangerückt. Bewegt sich das Ziel auch innerhalb des noch weiter an den Radarsensor herangerückten Bereiches C, so wird ein Alarmsignal erzeugt.

Die US-B 1-6 169 512 ist mit einem Verfahren zur Kalibrierung einer Objekterfassungseinrichtung befasst. Ein mit einer definierten Grenze versehener Überwachungsbereich wird abgebildet durch Aussenden von Signalwellen in eine Vielzahl von Richtungen um die Grenze des Überwachungsbereiches, wobei Reflektoren an mehreren Stellen um die Bereichsgrenze angeordnet sind. Aus den erfassten Bildern werden Informationen bezüglich eines Grenzparameters der Abbildungsmittel an der Bereichsgrenze gewonnen. Für jede Richtung wird ein Transmissionsparameter für den Sender kalibriert. Bei dem Grenzparameter kann es sich um die Sensitivität der Abbildungsmittel an der Bereichsgrenze und/oder die Signalintensität an der Bereichsgrenze handeln.

In der EP-A-0 158 731 wird ein Überwachungssystem beschrieben, bei dem für ein jeweiliges Entfernungstor ein mittlerer Messwert gebildet wird.

Die DE-C-195 21 511 ist mit einem Ultraschall-Überwachungssystem befasst, bei dem das Hüllkurvensignal eines jeweiligen reflektierten Ultraschallsignals als Raumantwort mit einem vorgebbaren Referenzprofil verglichen wird. Dabei können insbesondere auch die zu jeweils zwei aufeinanderfolgenden Signalbursts gehörenden Raumantworten miteinander verglichen werden.

Aus der US-A-5 936 524 ist ein Überwachungssystem der eingangs genannten Art bekannt, bei dem in einem Selbsttest-Modus für einen bestimmten Abstand das elektrische Potential eines niederfrequenten Empfangssignals mit dem Potential eines integrierten hochfrequenten Signals verglichen und so eine Störungserkennung durchgeführt wird.

Ziel der Erfindung ist es, ein zuverlässigeres und kostengünstiges Überwachungssystem der eingangs genannten Art zu schaffen, bei dem die zuvor genannten Nachteile beseitigt sind.

Diese Aufgabe wird nach der Erfindung dadurch gelöst, daß zur Erkennung von Eingriffen in den überwachten Bereich Radarsignale herangezogen werden, die in einem definierten größeren Abstand vom Sensor innerhalb des überwachten Bereichs bzw. auf einer durch einen entsprechend größeren Radius definierten Kugelschale reflektiert wurden, daß zur Erkennung von Störungen Radarsignale herangezogen werden, die in einem definierten kleineren Abstand vom Sensor bzw. auf einer durch einen entsprechend kleineren Radius definierten Kugelschale reflektiert wurden, und dass die für den kleineren Abstand bzw. die kleinere Kugelschale erhaltenen Messwerte mit den für den größeren Abstand bzw. die größere Kugelschale erhaltenen Messwerte verglichen werden und das Vergleichsergebnis bei einer jeweiligen Entscheidung, ob eine Störung oder ein Eingriff in den überwachten Bereich vorliegt, mit herangezogen wird.

Mit dieser Ausbildung ergibt sich ein äußerst zuverlässiges und dennoch kostengünstiges Überwachungssystem, bei dem die Gefahr des Auslösens eines falschen Alarms aufgrund von Störsignalen auf ein Minimum reduziert bzw. praktisch ausgeschlossen ist. Eventuelle Störsignale einschießlich EMC-Störsignale können zuverlässig erfaßt werden, ohne daß dazu noch ein besonderer EMC-Kanal erforderlich wäre. Entsprechend können auch die Kosten für einen solchen zusätzlichen EMC-Kanal eingespart werden. Zur Realisierung der betreffenden elektronischen Schaltung kann die bereits vorhandene gedruckte Schaltungskarte verwendet werden. Die freigegebenen Radiofrequenzen bleiben nach wie vor gültig.

Dabei können die dem kleineren Abstand bzw. der kleineren Kugelschale entsprechenden Messwerte zur Erkennung von Störungen und die dem größeren Abstand bzw. der größeren Kugelschale entsprechenden Messwerte zur Erkennung von Eingriffen in den Überwachungsbereich verwendet werden.

Damit kann insbesondere auch ausgeschlossen werden, dass sich beim Umschalten von einem Radius auf dem nächsten entstehende sogenannte statische Signaländerungen zum Beispiel infolge von statischen Objekten nicht störend auf das Messergebnis auswirken können.

Das erfindungsgemäße Überwachungssystem zeichnet sich somit insbesondere durch eine ihm zugrundeliegende Meßmethode zur Messung einer elektromagnetischen Signaländerung in einen scharf begrenzten Bereich mit hoher Signalunterdrückung aus.

Die verschiedenen Abstände bzw. Kugelschalen sind vorzugsweise durch entsprechende Mittel über ein gegenüber einem jeweiligen Sendezeitfenster zeitlich entsprechend verzögertes Empfangszeitfenster einstellbar. Je größer die eingestellte Verzögerung ist, um so größer wird der Abstand bzw. der betreffende Kugelschalenradius. Für kürzere Abstände bzw. kleinere Kugelschalenradien ist die Verzögerung entsprechend kleiner zu wählen.

Bei einer bevorzugten praktischen Ausführungsform des erfindungsgemäßen Überwachungssystems ist der Sensor so einstellbar, daß sich im ungestörten Zustand und bei fehlendem Eingriff in den überwachenden Bereich für den betreffenden äußeren Abstand bzw. die betreffende größere Kugelschale und den betreffenden kleineren Abstand bzw. die betreffende kleinere Kugelschale ein im wesentlichen gleiches elektrisches Potential ergibt.

Da passende Paarungen von Abständen bzw. Kugelschalenradien eher selten sind, müssen die Potentiale oder elektrische Feldstärken der Kugelschalen feiner angefahren werden. Dies ist zwar mit kleineren Schrittweiten der Radien bzw. der betreffenden Verzögerungen möglich. Die Präzision einer entsprechenden Verzögerungseinstelleinrichtung muß jedoch sehr hoch sein, so daß die betreffenden Einrichtungen bereits aufgrund der entstehenden Toleranzen in der Regel nur bedingt einsetzbar sind. Um auch bereits bei geringen Toleranzen ein genaues ansteuern der betreffenden Feldstärken bzw. Potentiale zu ermöglichen, kann zur Erzeugung des einen kleineren Abstand bzw. einer kleineren Kugelschale zugeordneten Potentials vorteilhafterweise ein mittleres Potential erzeugt werden, indem zwischen zwei kleineren Abständen bzw. Kugelschalen umgeschaltet wird, deren Potential kleiner bzw. größer als das den größeren Abstand bzw. der größeren Kugelschale zugeordnete Potential ist. Dabei wird das mittlere Potential vorzugsweise dadurch an das dem größeren Abstand bzw. der größeren Kugelschale zugeordnete Potential angeglichen, daß in einem entsprechenden zeitlichen Verhältnis zwischen den beiden kleineren Abständen bzw. Kugelschalen umgeschaltet wird.

Es ist jedoch beispielsweise auch möglich, das dem kleineren Abstand bzw. der kleineren Kugelschale zugeordnete Potential durch eine entsprechend einstellbare Sendefrequenz an das den größeren Abstand bzw. der größeren Kugelschale zugeordnete Potential anzugleichen. Dabei wird der Umstand ausgenutzt, daß die Sendefrequenz proportional in die Höhe der gemessenen Amplitude des empfangenen elektromagnetischen Pulses eingeht. Ist die Amplitude vergleichsweise zu hoch, so wird die Sendefrequenz solange verringert, bis die gewünschten Restwerte erreicht sind.

Da mit einem inneren Hilfspotential noch kein Aufschluß über die Richtungsänderung der Potentiale erhalten wird, wird vorzugsweise ein weiteres Hilfspotential aufgebaut. Bei einer bevorzugten praktischen Ausführungsform des erfindungsgemäßen Überwachungssystems wird somit außer dem einen kleineren Abstand bzw. einer kleineren Kugelschale zugeordneten elektrischen Potential ein einem weiteren kleineren Abstand bzw. einer weiteren kleineren Kugelschale zugeordnetes weiteres elektrisches Hilfspotential erzeugt.

Dabei ist der Sensor vorzugsweise so einstellbar, daß im ungestörten Zustand und bei fehlendem Eingriff in den überwachten Bereich das weitere Hilfspotential zumindest im wesentlichen gleich dem den größeren Abstand bzw. der größeren Kugelschale zugeordneten Potential ist.

Auch zur Erzeugung des weiteren Hilfspotentials kann wieder ein mittleres Potential erzeugt werden, indem zwischen zwei kleineren Abständen bzw. Kugelschalen umgeschaltet wird, deren Potential kleiner bzw. größer als das dem größeren Abstand bzw. der größeren Kugelschale zugeordnete Potential list.

Auch dieses weitere Hilfspotential wird zweckmäßigerweise wieder dadurch an das dem größeren Abstand bzw. der größeren Kugelschale zugeordnete Potential angeglichen, daß in einem entsprechenden zeitlichen Verhältnis zwischen den beiden kleineren Abständen bzw. Kugelschalen umgeschaltet wird.

Das weitere Hilfspotential kann jedoch auch wieder durch eine entsprechend eintstellbare Sendefrequenz an das den größeren Abstand bzw. der größeren Kugelschale zugeordnete Potential angeglichen werden.

Bei einer bevorzugten praktischen Ausführungsform des erfindungsgemäßen Überwachungssystems wird eine Differenz zwischen den Meßwerten des kleineren Abstands bzw. der kleineren Kugelschale und den Meßwerten eines Referenzabstands bzw. einer Referenzkugelschale gebildet und anstelle der Meßwerte des kleineren Abstands bzw. der kleineren Kugelschale als eine entsprechende Ausgangsgröße herangezogen.

Zudem kann vorteilhafterweise eine Differenz zwischen den Meßwerten des größeren Abstands bzw. der größeren Kugelschale und den Meßwerten eines Referenzabstands bzw. einer Referenzkugelschale gebildet und anstelle der Meßwerte des größeren Abstands bzw. der größeren Kugelschale als eine entsprechende Ausgangsgröße herangezogen werden.

Als Referenzabstand bzw. Referenzkugelschale kann z.B. der das weitere elektrische Hilfspotential erzeugende Abstand bzw. die dieses weitere elektrische Hilfspotential erzeugende Referenzkugelschale gewählt werden.

Das Überwachungssystem umfaßt vorzugsweise eine entsprechende elektronische Steuer- und/oder Auswerteschaltung.

Dabei kann eine solche elektronische Steuer- und/oder Auswerteschaltung beispielsweise einen Sendepulsgenerator umfassen, um sehr kurze, vorzugsweise im Bereich von etwa 160 ps liegende elektromagnetische Pulse zu erzeugen.

Von Vorteil ist auch, wenn die elektronische Steuer- und/oder Auswerteschaltung eine Tor- oder Abtastschaltung (sampler) umfaßt, über die die entsprechend verzögerten empfangenen Radarsignale einem Filter zugeführt werden, um aus den kurzen Abtastabschnitten ein niederfrequentes auszuwertendes Signal zu erzeugen.

Die elektronische Steuer- und/oder Auswerteschaltung umfaßt vorzugsweise einen Mikrocontroller, dem die gefilterten auszuwertenden Signale, vorzugsweise nach erfolgter Verstärkung, zugeführt werden.

Da die beim Eindringen in den überwachten Bereich entstehenden Signale sehr niederfrequent sind, besitzt das Filter vorzugsweise eine sehr niedrige untere Grenzfrequenz, die beispielsweise im Bereich von etwa 2 Hz liegen kann. Wie bereits erwähnt, werden hierbei mit abgebildete statische Signaländerungen, wie sie beim Umschalten von einem Radius auf den nächsten entstehen können, unterdrückt, indem der innere Radius zur Erkennung von Störungen und der äußere Radius zur Erkennung von Eingriffen in den überwachten Bereich verwendet werden.

Das erfindungsgemäße Überwachungssystem kann insbesondere Teil eines Innenraumschutzsystems und/oder Teil eines Einbruchmeldesystems sein.

Bei einer bevorzugten praktischen Ausführungsform des erfindungsgemäßen Überwachungssystems ist der Sensor in einem Kraftfahrzeug integriert.

Als Sensor kann insbesondere ein im Hochfrequenzbereich arbeitender Kurzdistanz-Radarsensor (SDR = Short Distance Radar) vorgesehen sein.

Die Erfindung wird im folgenden anhand eines Ausführungsbeispiels unter Bezugnahme auf die Zeichnung näher erläutert; in dieser zeigen:
- Figur 1: ein beispielhaftes ungestörtes Echoprofil eines von einem Sensor eines Überwachungssystems ausgesendeten elektromagnetischen Pulses, wobei das betreffende Signal ausgehend vom Zeitpunkt des Aussendens des Pulses in 64 zeitlichen Schritten dargestellt ist,
- Figur 2: ein beispielhaftes gestörtes Echprofil des elektromagnetischen Pulses,
- Figur 3: ein beispielhaftes ungestörtes Echoprofil des elektromagnetischen Pulses mit sich infolge eines anfänglichen Eintritts in den überwachten Bereich ergebenden Feldstärkeänderungen im äußeren Bereich der größeren Abstände oder Kugelschalen,
- Figur 4: eine mit der der Figur 3 vergleichbare Darstellung des Echoprofils mit sich infolge des weiteren Eintritts in den überwachten Bereich ergebenden Feldstärkeänderungen in einem zunehmend größer werdenden äußeren Bereich,
- Figur 5: eine rein schematische Darstellung einer beispielhaften Ausführungsform eines entsprechenden Überwachungssystems und
- Figur 6: ein mit dem der Figur 1 vergleichbares Echoprofil, in dem rein beispielhaft die jeweilige Lage der kleineren oder inneren Kugelschale und der größeren bzw. äußeren Kugelschale angedeutet ist.

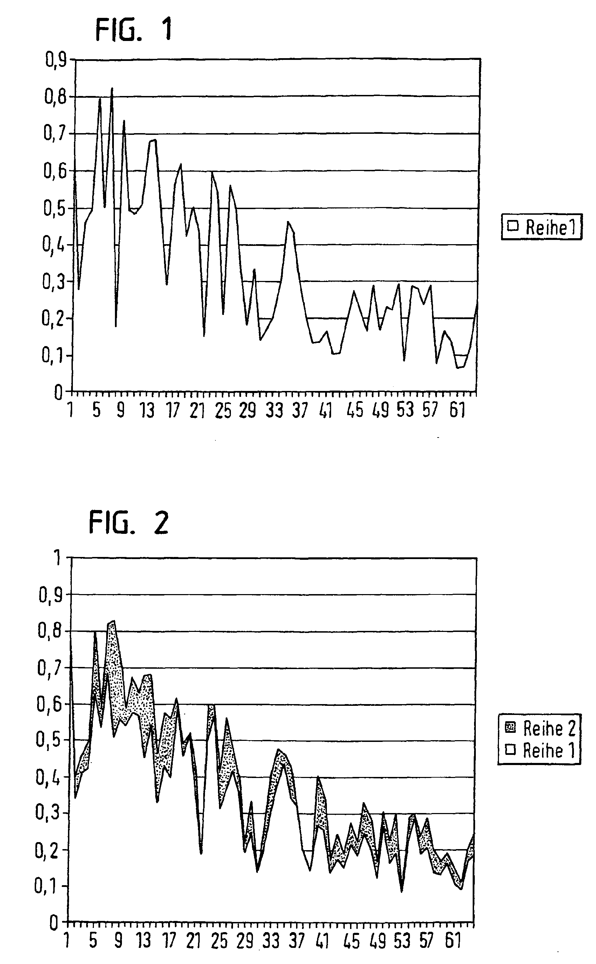

Figur 1 zeigt ein beispielhaftes ungestörtes Echoprofil, in dem die gemessenen Feldstärken über dem eingestellten Abstand bzw. Radius der jeweiligen Kugelschale dargestellt sind. Dabei ist das betreffende Signal ausgehend vom Zeitpunkt des Aussendens des elektromagnetischen Pulses in 64 aufeinanderfolgenden zeitlichen Schritten dargestellt.

Wie diesem durch eine entsprechende Meßreihe erhaltenen Echoprofil entnommen werden kann, ergibt sich für die verschiedenen Kugelschalen ein unterschiedliches Reflexionsverhalten.

Figur 2 zeigt ein beispielhaftes gestörtes Echoprofil des elektromagnetischen Pulses, das durch zwei Meßreihen erhalten wurde. Daß das Echoprofil gestört ist, ergibt sich daraus, daß das in der Meßreihe 1 erhaltene Signal von dem mit der Meßreihe 2 erhaltenen Signal verschieden ist. Die betreffende Störung des Meßsignals und/oder Empfangssignals führt zu unerwünschten Modulationen im eingestellten Abstand bzw. Kugelschalenradius.

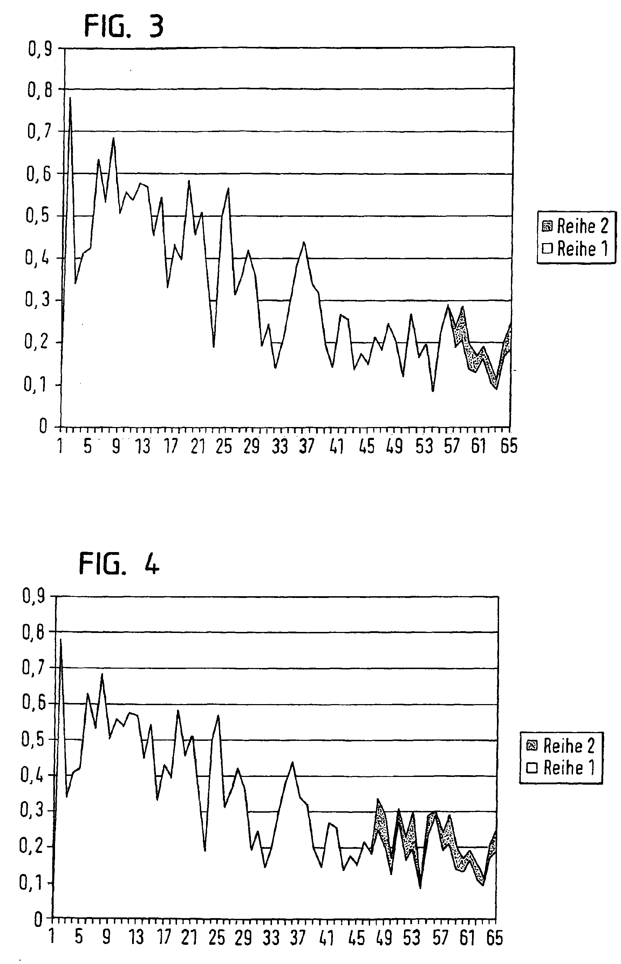

Figur 3 zeigt ein beispielhaftes ungestörtes Echoprofil des elektromagnetischen Pulses mit sich infolge eines anfänglichen Eintritts in den überwachten Bereich ergebenden Feldstärkeänderungen im äußeren Bereich der größeren Abstände oder Kugelschalen. Mit dem Eintritt in den überwachten Bereich treten somit zunächst nur ganz außen Änderungen der Feldstärken auf, während die Feldstärken im inneren Bereich unverändert bleiben.

Figur 4 zeigt eine mit der der Figur 3 vergleichbare Darstellung des Echoprofils mit sich infolge des weiteren Eintritts in den überwachten Bereich ergebenden Feldstärkeänderungen in einem zunehmend größer werdenden äußeren Bereich. Im Vergleich zu der Darstellung gemäß Figur 3 ist somit von den Feldstärkeänderungen zwar ein größerer äußerer Bereich betroffen, die Feldstärken im inneren Bereich bleiben jedoch nach wie vor unverändert.

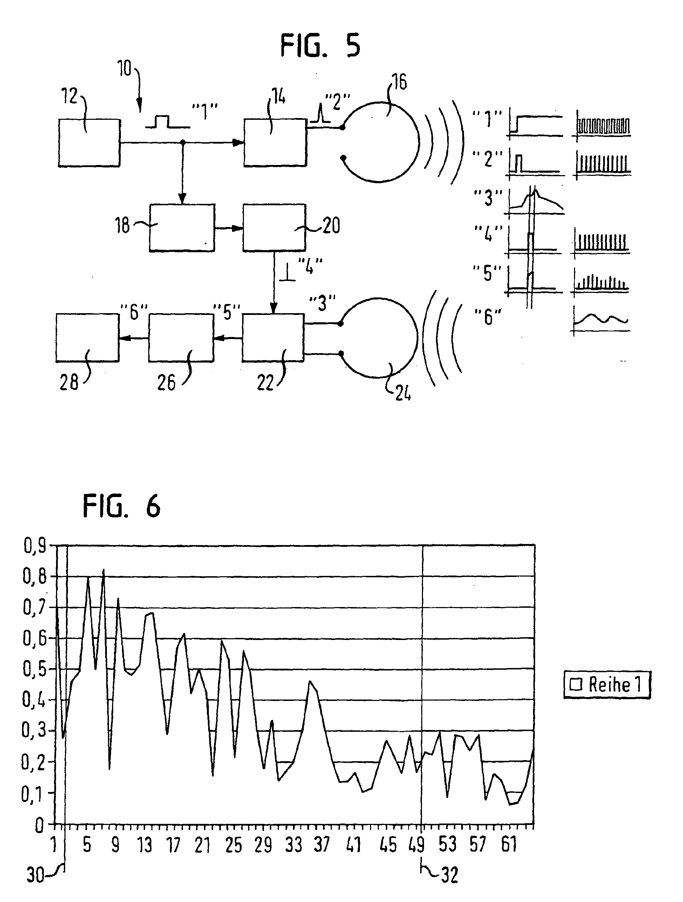

Figur 5 zeigt in rein schematischer Darstellung eine beispielhafte Ausführungsform eines Sensors 10 eines insbesondere für Kraftfahrzeuge geeigneten Überwachungssystems.

Mittels eines Generators 12 wird ein Sendepulsgenerator 14 (SRD = step recovery pulse generator) dazu angeregt, einen sehr kurzen elektromagnetischen Puls beispielsweise im Bereich von etwa 160 ps, zu erzeugen. Der Generator 12 kann periodisch oder auch aperiodisch arbeiten. Dabei kann es sich beispielsweise um einen z.B. in einem Bereich von etwa 1 bis etwa 10 MHz arbeitenden Pulsgenerator handeln.

Der Sendepulsgenerator 14 beaufschlagt eine Sendeantenne 16.

Das Ausgangssignal des Generators 12 wird gleichzeitig auf eine Verzögerungseinrichtung 18, z.B. eine Verzögerungsleitung, gegeben, die mit einer entsprechenden Verzögerung einen Pulsgenerator 20 beaufschlagt. Über den Pulsgenerator 20 wird eine Tor- oder Abtastschaltung 22 (sampler) angesteuert, der die über eine Empfangsantenne 24 empfangenen Signale einem Filter 26 zuführt, dem z.B. ein Mikrocontroller 28 nachgeschaltet ist.

Die durch die Einrichtung 18 erzeugte Verzögerung ist beispielsweise über einen Mikrocontroller oder eine feldprogrammierbare Torschaltung (FPGA = field programmable gate array) digital oder analog einstellbar, um zum richtigen Zeitpunkt das über die Empfangsantenne 24 empfangene Signal an das Filter 26 weiterzuleiten.

Das Filter 26 besitzt die Aufgabe, aus den kurzen Abtast- oder Sampleabschnitt ein niederfrequentes auswertbares Signal herzustellen. Das gefilterte Signal wird verstärkt und anschließend dem Mikrocontroller 28 zugeführt.

In der rechten Hälfte der Figur 5 ist für verschiedene Stellen der Schaltung das Signal eines Pulses (im linken Teil im kleinen Zeitmaßstab) bzw. eine Vielzahl von Pulsen (im rechten Teil im großen Zeitmaßstab) dargestellt.

Da die beim Eindringen in den überwachten Bereich entstehenden Signale sehr niederfrequent sind, muß das Filter 26 eine sehr niedrige untere Grenzfrequenz besitzen, die beispielsweise bei etwa 2 Hz liegt.

Angesichts dieser niedrigen Grenzfrequenz werden auch statische Signaländerungen bzw. auf statische Objekte zurückzuführende Signaländerungen abgebildet, wie sie beim Umschalten von einem Kugelschalenradius auf den nächsten entstehen können. Die dabei entstehenden Signale sind leider so groß, daß das Signal hierbei beispielsweise etwa 200 ms bis 500 ms benötigt, um wieder in den Arbeitsbereich der Schaltung zu gelangen.

Da nicht das gesamte Echoprofil ausgewertet werden muß, kann dieses Problem durch eine geeignete Auswahl einer inneren Kugelschale zumindest verringert werden. Dabei wird ein kleinerer oder innerer Kugelschalenradius 30 (vgl. Figur 6) zur Erkennung von Störungen und ein größerer bzw. äußerer Kugelschalenradius 32 zur Erkennung von Eingriffen in den überwachten Bereich ausgewählt. Figur 6 zeigt ein mit dem der Figur 1 vergleichbares Echoprofil, in dem die jeweilige Lage der kleineren bzw. inneren Kugelschale 30 und der größeren bzw. äußeren Kugelschale 32 angedeutet ist.

Da entsprechende Paarungen eher selten sind, muß das Potential feiner angefahren werden. Mit einer kleineren Schrittweise der Radien ist dies zwar möglich. Da die Präzision der betreffenden Verzögerungseinstelleinrichtung jedoch sehr hoch sein muß, werden entsprechend hohe Toleranzen erforderlich. Um nun aber unnötig hohe Toleranzen zu vermeiden, kann das jeweils richtige Potential beispielsweise auch dadurch angesteuert werden, daß durch sehr schnelles Umschalten im richtigen zeitlichen Verhältnis zwischen zwei Radien ein mittleres Potential erzeugt wird. Dabei erfolgt die Umschaltung ausgehend von ähnlichen Potentialen, die einmal über und einmal unter dem Potential des Überwachungsradius liegen. Dadurch ist sichergestellt, daß es in jedem Fall ein Potential dazwischen gibt, das gleich dem Potential des Überwachungsradius ist.

Da eine entsprechende Anordnung zur Ermittlung des inneren Hilfspotentials noch keinen Aufschluß über die Richtungsänderung der Potentiale ergibt, wird ein weiteres Hilfspotential aufgebaut. Der Gleichanteil steht in dieser Anordnung nämlich nicht zur Verfügung, so daß sich eine Reduzierung des Signals im Innern gleich auswirken kann wie eine Potentialerhöhung im Überwachungsradius. In der angegebenen Weise kann das Potential in einer inneren und einer äußeren Kugelschale zuverlässig ermittelt werden. Im Prinzip werden die Meßwerte der inneren Kugelschale vom Meßwert eines Referenzpotentials abgezogen, bzw. die Meßwerte der äußeren Kugelschale werden vom Meßwert der Referenzkugelschale abgezogen.

Das zweite Hilfspotential kann genauso erzeugt werden wie das erste, wobei die ausgewählten Radien allerdings unabhängig von den Potentialen des ersten Hilfspotentials sein müssen. Für den eher seltenen Fall, daß keine weitere Paarung von Hilfsradien gefunden wird, muß der Überwachungsradius lediglich eine Position nach innen verfahren werden. Diese Vorgehensweise kann dann solange wiederholt werden, bis alle Bedingungen erfüllt sind.

Neben der Methode, die Potentiale durch schnelles Umschalten an das korrekte Potential anzugleichen, können Potentialsprünge auch durch eine entsprechende Reduktion der Sendefrequenz justiert werden. Die Sendefrequenz geht nämlich proportional in die Höhe der gemessenen Amplitude ein. Ist die Amplitude im Vergleich zu hoch, so wird die Sendefrequenz so lange verringert, bis ein hinreichender Meßwertangleich erreicht ist, so daß die betreffende Kugelschale wechselweise mit den anderen Kugelschalen herangezogen werden kann. Da das Verhalten hier nicht linear ist, funktioniert der Mechanismus nur innerhalb eines kleinen Bereichs.

Mit den angegebenen Möglichkeiten zum Messen eines inneren und eines äußeren Potentials kann z.B. ein Mikrocontroller nun durch Auswertung der Signale über das Merkmal einer eventuellen inneren Störung eine Aussage darüber herleiten, ob eine Störung oder tatsächlich ein Eingriff in den überwachten Bereich vorliegt.

Bei dem in der Figur 5 dargestellten Sensor kann es sich insbesondere um einen im Hochfrequenzbereich arbeitenden Kurzdistanz-Radarsensor (SDR = short distance radar) für insbesondere einen Innenraumschutz handeln.

### Bezugszeichenliste

- 10: Sensor
- 12: Generator
- 14: Sendepulsgenerator
- 16: Sendeantenne
- 18: Verzögerungseinrichtung, Verzögerungsleitung
- 20: Pulsgenerator
- 22: Tor- oder Abtastschaltung (sampler)
- 24: Empfangsantenne
- 26: Filter
- 28: Mikrocontroller
- 30: innerer Kugelschalenradius, innere Kugelschale
- 32: äußerer Kugelschalenradius, äußere Kugelschale

## Patentansprüche

1. Überwachungssystem insbesondere für Kraftfahrzeuge, mit wenigstens einem als Radareinheit vorgesehenen Sensor (10), der pulsartige Radarsignale ausstrahlt und in einem zu überwachenden Bereich reflektierte Radarsignale empfängt, die zur Erkennung von Eingriffen in den überwachten Bereich herangezogen werden,
**dadurch gekennzeichnet,**
**daß** zur Erkennung von Eingriffen in den überwachten Bereich Radarsignale herangezogen werden, die in einem definierten größeren Abstand vom Sensor (10) innerhalb des überwachten Bereichs bzw. auf einer durch einen entsprechend größeren Radius definierten Kugelschale (32) reflektiert wurden, dass zur Erkennung von Störungen Radarsignale herangezogen werden, die in einem definierten kleineren Abstand vom Sensor bzw. auf einer durch einen entsprechend kleineren Radius definierten Kugelschale (30) reflektiert wurden, und dass die für den kleineren Abstand bzw. die kleinere Kugelschale (30) erhaltenen Messwerte mit den für den größeren Abstand bzw. die größere Kugelschale (32) erhaltenen Messwerten verglichen werden und das Vergleichsergebnis bei einer jeweiligen Entscheidung, ob eine Störung oder ein Eingriff in den überwachten Bereich vorliegt, mit herangezogen wird.

2. Überwachungssystem nach Anspruch 1,
**dadurch gekennzeichnet,**
**dass** Mittel zur Einstellung der verschiedenen Abstände bzw. Kugelschalen (30, 32) über ein gegenüber einem jeweiligen Sendezeitfenster zeitlich entsprechend verzögertes Empfangszeitfenster vorgesehen sind.

3. Überwachungssystem nach Anspruch 1 oder 2,
**dadurch gekennzeichnet,**
**dass** der Sensor (10) so einstellbar ist, dass sich im ungestörten Zustand und bei fehlendem Eingriff in den überwachten Bereich für den betreffenden größeren Abstand bzw. die betreffende größere Kugelschale (32) und den betreffenden kleineren Abstand bzw. die betreffende kleinere Kugelschale (30) ein im Wesentlichen gleiches elektrisches Potential ergibt.

4. Überwachungssystem nach einem der vorhergehenden Ansprüche,
**dadurch gekennzeichnet,**
**dass** zur Erzeugung des einem kleineren Abstand bzw. einer kleineren Kugelschale (30) zugeordneten elektrischen Potentials ein mittleres elektrisches Potential erzeugt wird, indem zwischen zwei kleineren Abständen bzw. Kugelschalen umgeschaltet wird, deren elektrisches Potential kleiner bzw. größer als das dem größeren Abstand bzw. der größeren Kugelschale (32) zugeordnete elektrische Potential ist.

5. Überwachungssystem nach Anspruch 4,
**dadurch gekennzeichnet,**
**dass** das mittlere elektrische Potential dadurch an das dem größeren Abstand bzw. der größeren Kugelschale (32) zugeordnete elektrische Potential angeglichen wird, dass in einem entsprechenden zeitlichen Verhältnis zwischen den beiden kleineren Abständen bzw. Kugelschalen umgeschaltet wird.

6. Überwachungssystem nach einem der vorhergehenden Ansprüche,
**dadurch gekennzeichnet,**
**dass** das dem kleineren Abstand bzw. der kleineren Kugelschale (30) zugeordnete elektrische Potential durch eine entsprechend einstellbare Sendefrequenz an das dem größeren Abstand bzw. der größeren Kugelschale (32) zugeordnete elektrische Potential angeglichen wird.

7. Überwachungssystem nach einem der vorhergehenden Ansprüche,
**dadurch gekennzeichnet,**
**dass** außer dem einem kleineren Abstand bzw. einer kleineren Kugelschale (30) zugeordneten elektrischen Potential ein einem weiteren kleineren Abstand bzw. einer weiteren kleineren Kugelschale zugeordnetes weiteres elektrisches Hilfspotential erzeugt wird.

8. Überwachungssystem nach Anspruch 7,
**dadurch gekennzeichnet,**
**dass** der Sensor (10) so einstellbar ist, dass im ungestörten Zustand und bei fehlendem Eingriff in den überwachten Bereich das weitere elektrische Hilfspotential zumindest im wesentlichen gleich dem dem größeren Abstand bzw. der größeren Kugelschale (32) zugeordneten elektrischen Potential ist.

9. Überwachungssystem nach Anspruch 7 order 8,
**dadurch gekennzeichnet,**
**dass** zur Erzeugung des weitere elektrischen Hilfspotentials ein mittleres elektrisches Potential erzeugt wird, indem zwischen zwei kleineren Abständen bzw. Kugelschalen umgeschaltet wird, deren elektrisches Potential einer bzw. größer als das dem größeren Abstand bzw. der größeren Kugelschale (32) zugeordnete elektrische Potential ist.

10. Überwachungssystem nach Anspruch 9,
**dadurch gekennzeichnet,**
**dass** das weitere elektrische Hilfspotential **dadurch** an das dem größeren Abstand bzw. der größeren Kugelschale (32) zugeordnete elektrische Potential angeglichen wird, dass in einem entsprechenden zeitlichen Verhältnis zwischen den beiden kleineren Abständen bzw. Kugelschalen umgeschaltet wird.

11. Überwachungssystem nach einem der vorhergehenden Ansprüche,
**dadurch gekennzeichnet,**
**dass** das weitere elektrische Hilfspotential durch eine entsprechend einstellbare Sendefrequenz an das dem größeren Abstand bzw. der größeren Kugelschale (32) zugeordnete elektrische Potential angeglichen wird.

## Claims

1. A monitoring system, in particular for motor vehicles, having at least one sensor (10) provided as a radar unit, which emits pulse-like radar signals and receives radar signals reflected in a region to be monitored which are used for the detection of encroachments into the monitored region **characterized in that** radar signals are used for the detection of encroachments into the monitored region which were reflected at a defined larger spacing from the sensor (10) within the monitored region or at a spherical shell (32) defined by an appropriately larger radius; **in that** radar signals are used for the detection of interference which were reflected at a defined smaller spacing from the sensor or at a spherical shell (30) defined by an appropriately smaller radius; and **in that** the measured values obtained for the smaller spacing or the smaller spherical shell (30) are compared with the measured values obtained for the larger spacing or the larger spherical shell (32) and the result of the comparison is also used in a respective decision as to whether an interference or an encroachment into the monitored region is present.

2. A monitoring system in accordance with claim 1, **characterized in that** means are provided for the adjustment of the different spacings or spherical shells (30, 32) over a reception time window delayed appropriately in time with respect to a respective transmission time window.

3. A monitoring system in accordance with claim 1 or claim 2, **characterized in that** the sensor (10) can be adjusted such that an at least substantially equal electrical potential results in the state without interference and with no encroachment into the monitored region for the relevant larger spacing or the relevant larger spherical shell (32) and the relevant smaller spacing or the relevant smaller spherical shell (30).

4. A monitoring system in accordance with any one of the preceding claims, **characterized in that** a mean electrical potential is produced to generate the electrical potential associated with a smaller spacing or a smaller spherical shell (30) by switching between two smaller spacings or spherical shells whose electrical potential is smaller or larger than the electrical potential associated with the larger spacing or the larger spherical shell (32).

5. A monitoring system in accordance with claim 4, **characterized in that** the mean electrical potential is matched to the electrical potential associated with the larger spacing or the larger spherical shell (32) by switching between the two smaller spacings or spherical shells in an appropriate time ratio.

6. A monitoring system in accordance with any one of the preceding claims, **characterized in that** the electrical potential associated with the smaller spacing or the smaller spherical shell (30) is matched to the electrical potential associated with the larger spacing or the larger spherical shell (32) by an appropriately adjustable transmission frequency.

7. A monitoring system in accordance with any one of the preceding claims, **characterized in that** a further electrical auxiliary potential associated with a further smaller spacing or a further smaller spherical shell is produced in addition to the electrical potential associated with a smaller spacing or a smaller spherical shell (30).

8. A monitoring system in accordance with claim 7, **characterized in that** the sensor (10) can be adjusted such that the further electrical auxiliary potential is at least substantially equal to the electrical potential associated with the larger spacing or the larger spherical shell (32) in the state without interference and with no encroachment into the monitored region.

9. A monitoring system in accordance with claim 7 or claim 8, **characterized in that** a mean electrical potential is generated for the production of the further electrical auxiliary potential by switching between two smaller spacings or spherical shells whose electrical potential is respectively smaller or larger than the electrical potential associated with the larger spacing or the larger spherical shell (32).

10. A monitoring system in accordance with claim 190, **characterized in that** the further electrical auxiliary potential is matched to the electrical potential associated with the larger spacing or the larger spherical shell (32) by switching between the two smaller spacings or spherical shells in an appropriate time ratio.

11. A monitoring system in accordance with any one of the preceding claims, **characterized in that** the further electrical auxiliary potential is matched to the electrical potential associated with the larger spacing or the larger spherical shell (32) by an appropriately adjustable transmission frequency.

## Revendications

1. Système de surveillance destiné en particulier aux véhicules, avec au moins un capteur (10) prévu en guise d'unité radar qui émet des signaux radar par impulsions et reçoit des signaux radar réfléchis dans une zone à surveiller qui sont utilisés pour détecter les intrusions dans la zone surveillée, **caractérisé en ce que**, pour identifier les intrusions dans la zone surveillée sont utilisés des signaux radar qui ont été réfléchis à une grande distance définie du capteur (10) à l'intérieur de la zone surveillée, ou sur une enveloppe sphérique (32) définie d'un grand rayon approprié, **en ce que**, pour identifier les parasites sont utilisés des signaux radar qui ont été réfléchis à une petite distance définie du capteur, ou sur une enveloppe sphérique (30) définie d'un petit rayon approprié, et **en ce que** les valeurs de mesure obtenues pour la petite distante ou la petite enveloppe sphérique (30) sont comparées avec les valeurs de mesure obtenues pour la grande distance et la grande enveloppe (32) et le résultat de la comparaison est utilisé pour décider de la présence d'un parasite ou d'une intrusion dans la zone surveillée.

2. Système de surveillance selon la revendication 1, **caractérisé en ce que** sont prévus des moyens pour régler les différentes distances ou enveloppes sphériques (30, 32) sur une fenêtre temporelle de réception temporisée de manière appropriée par rapport à une fenêtre temporelle d'émission correspondante.

3. Système de surveillance selon la revendication 1 ou 2, **caractérisé en ce que** le capteur (10) est réglable de telle sorte qu'en l'absence de parasite et d'intrusion dans la zone surveillée, il y a sensiblement le même potentiel électrique pour la grande distance concernée ou la grande enveloppe sphérique (32) concernée et la petite distance concernée ou la petite enveloppe sphérique (30) concernée.

4. Système de surveillance selon l'une quelconque des revendications précédentes, **caractérisé en ce que**, pour générer le potentiel électrique associé à une petite distance ou à une petite enveloppe sphérique (30), est généré un potentiel électrique moyen en alternant entre deux petites distances ou enveloppes sphériques dont le potentiel électrique est inférieur ou supérieur au potentiel électrique associé à la grande distance ou à la grande enveloppe sphérique (32).

5. Système de surveillance selon la revendication 4, **caractérisé en ce que** le potentiel électrique moyen est aligné sur le potentiel électrique associé à la grande distance ou à la grande enveloppe sphérique (32) en alternant dans un rapport temporel correspondant entre les deux petites distances ou enveloppes sphériques.

6. Système de surveillance selon l'une quelconque des revendications précédentes, **caractérisé en ce que** le potentiel électrique associé à la petite distance ou à la petite enveloppe sphérique (30) est aligné par une fréquence d'émission réglable en conséquence sur le potentiel électrique associé à la grande distance ou à la grande enveloppe sphérique (32).

7. Système de surveillance selon l'une quelconque des revendications précédentes, **caractérisé en ce que**, hormis le potentiel électrique associé à une petite distance ou une petite enveloppe sphérique (30), est généré un autre potentiel électrique auxiliaire associé à une autre petite distance ou une autre petite enveloppe sphérique.

8. Système de surveillance selon la revendication 7, **caractérisé en ce que** le capteur est réglable de telle sorte qu'en l'absence de parasite et d'intrusion dans la zone surveillée, l'autre potentiel auxiliaire électrique est au moins sensiblement égal au potentiel électrique associé à la grande distance ou à la grande enveloppe sphérique (32).

9. Système de surveillance selon la revendication 7 ou 8, **caractérisé en ce que**, pour générer l'autre potentiel auxiliaire électrique, on génère un potentiel électrique moyen en alternant entre deux petites distances ou enveloppes sphériques dont le potentiel électrique est inférieur ou supérieur au potentiel électrique associé à la grande distance ou à la grande enveloppe sphérique (32).

10. Système de surveillance selon la revendication 9, **caractérisé en ce que** l'autre potentiel électrique moyen est aligné sur le potentiel électrique associé à la grande distance ou à la grande enveloppe sphérique (32) en alternant dans un rapport temporel correspondant entre les deux petites distances ou enveloppes sphériques.

11. Système de surveillance selon l'une quelconque des revendications précédentes, **caractérisé en ce que** l'autre potentiel électrique est aligné par une fréquence d'émission réglable en conséquence sur le potentiel électrique associé à la grande distance ou à la grande enveloppe sphérique (32).
